# EUROPEAN PATENT APPLICATION

(11) **EP 3 594 188 A1**
(43) Date of publication of application: **15.01.2020**
(21) Application number: 17745638.1
(22) Date of filing: 06.06.2017
(51) Int. Cl.: C02F 9/02

(54) **WATER FILTERING SYSTEM**

(30) Priority: 07.03.2017 CN 201710132573; 07.03.2017 CN 201720219929 U
(71) Applicant: Foshan Shunde Midea Water Dispenser Mfg. Co., Ltd., Foshan, Guangdong 528311 (CN); Midea Group Co., Ltd., Foshan, Guangdong 528311 (CN)
(72) Inventor: YANG, Lyu, Foshan Guangdong 528311 (CN)
(74) Representative: RGTH
(86) International application number: PCT/CN2017/087312
(87) International publication number: WO 2018/161458

(57) **Abstract**

A water filtration system (100) is provided and includes a raw-water inlet (100a), a pure-water outlet (100b), a purified-water outlet (100c), a waste-water outlet (100d) and an integrated filter cartridge (1). The integrated filter cartridge (1) has a first port (10a), a second port, a third port, a fourth port, a fifth port and a sixth port (10f). The first port (10a) is connected to the raw-water inlet (100a), and the second port (10b) is connected to the purified-water outlet (100c), a connection conduit (101) is connected to the third port (10c), and a free end of the connection conduit (101) is connected between the second port (10b) and the purified-water outlet (100c), the fourth port (10d) is connected to the pure-water outlet (100b), the fifth port (10e) is connected to the waste-water outlet (100d), at least one of a conduit in connection with the pure-water outlet (100b) and the sixth port (10f) is provided with a water storage device (2).

## Description

### FIELD

The present disclosure relates to a technical field of water purification, and more particularly to a water filtration system.

### BACKGROUND

In the related art, a water filtration system in a water purifier may generally produce water of one quality. However, since a user needs other kinds of domestic water such as washing water in addition to drinking water, the water filtration system that can only produce one kind of water cannot satisfy users' requirements for water. Moreover, when the user needs a large amount of water, the water filtration system cannot produce the large amount of water for the user in a short time.

### SUMMARY

Embodiments of the present disclosure seek to solve at least one of the problems existing in the related art to at least some extent. Accordingly, a water filtration system is provided by the present disclosure. The water filtration system may satisfy the requirement of a user for a large amount of water and may improve the utilization ratio of water resources.

The water filtration system according to embodiments of the present disclosure includes a raw-water inlet, a pure-water outlet, a purified-water outlet, a waste-water outlet and an integrated filter cartridge, the integrated filter cartridge comprising a pre-filter cartridge, a fine filter cartridge and a post-filter cartridge and having a first port, a second port, a third port, a fourth port, a fifth port and a sixth port, the first port being connected to the raw-water inlet, the second port being connected to the purified-water outlet, the third port being connected to a communication flow path, and the communication flow path having a free end being connected between the second port and the purified-water outlet, the fourth port being connected to the pure-water outlet, the fifth port being connected to the waste-water outlet, at least one of a flow path in connection with the pure-water outlet and the sixth port being provided with a water storage device, in which raw water entering through the raw-water inlet and being filtered by the pre-filter cartridge, the fine filter cartridge and the post-filter cartridge in sequence is configured to flow out through the pure-water outlet, and raw water entering through the raw-water inlet and being filtered only by the pre-filter cartridge is configured to flow out through the purified-water outlet.

For the water filtration system according to embodiments of the present disclosure, by disposing the water storage device on at least one of the conduit connected to the pure-water outlet and the sixth port of the water filtration system, the requirement of the user for a large amount of water can be satisfied. In the meanwhile, the water filtration system can obtain the pure water and the purified water of two different qualities, such that utilization ratio of the water resources is improved, and water is saved.

According to some embodiments of the present disclosure, the pre-filter cartridge is disposed separately from the fine filter cartridge and the post-filter cartridge, such that conduits in the integrated filter cartridge can be simplified.

According to some embodiments of the present disclosure, the pre-filter cartridge is located at a top portion of the fine filter cartridge and the post-filter cartridge, such that ports of the integrated filter cartridge are arranged in a dispersed manner, thereby facilitating connections between the ports of the integrated filter cartridge and the conduits of the water filtration system.

According to some embodiments of the present disclosure, a water-inlet valve and a booster pump are arranged between the second port and the purified-water outlet, the water-inlet valve is located between the purified-water outlet and the booster pump, and the free end of the connection conduit is located at a side of the water-inlet valve adjacent to the purified-water outlet. Thereby, the water filtration system can obtain the pure water and the purified water of two different qualities, such that the utilization ratio of the water resources is improved, and by disposing the connection conduit, the number of components in the water filtration system may be reduced.

According to some embodiments of the present disclosure, the water storage device is provided with a detection device comprising at least one of a pressure detection device and a liquid-level detection device, and when the detection device detects that the water storage device is not full of liquid, a controller of the water filtration system controls the water-inlet valve to open and controls the booster pump to operate, thereby implementing an automatic water storage function of the water filtration system.

According to some embodiments of the present disclosure, a pre-filter mesh is arranged between the first port and the purified-water outlet, the pre-filter mesh may protect the pre-filter cartridge.

According to some embodiments of the present disclosure, a check valve and a high pressure switch are arranged between the fourth port and the pure-water outlet, and the check valve and the high pressure switch are integrated into a whole, such that the number of components in the water filtration system is reduced, thereby simplifying the water filtration system.

According to some embodiments of the present disclosure, the water storage device is configured as a water storage bag, a pressure tank or a water box, such that the water storage device may be alternatively disposed according to actual situations to better satisfy the actual requirement.

According to some embodiments of the present disclosure, the fine filter cartridge is configured as a reverse osmosis filter cartridge or a nanofiltration membrane cartridge, thereby ensuring the water quality of the pure water and ensuring the health of the user.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:

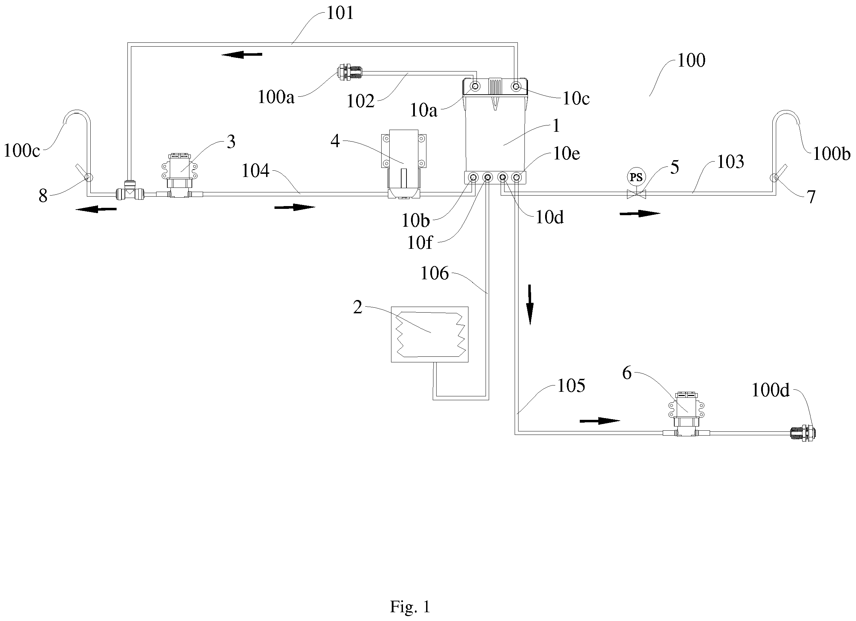

Fig. 1 is a schematic view of a water filtration system according to embodiments of the present disclosure.

### Reference numerals:

100 water filtration system;
100a raw-water inlet; 100b pure-water outlet;
100c purified-water outlet; 100d waste-water outlet;
101 connection conduit; 102 raw-water conduit; 103 pure-water conduit;
104 purified-water conduit; 105 waste-water conduit; 106 stored-water conduit;
1 integrated filter cartridge; 10a first port; 10b second port;
10c third port; 10d fourth port; 10e fifth port; 10f sixth port;
2 water storage device; 3 water-inlet valve; 4 booster pump; 5 check-valve high pressure switch;
6 waste-water solenoid valve; 7 pure-water valve; 8 purified-water valve.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the specification, terms such as "first" and "second" are used herein for purposes of description and are not intended to indicate or imply relative importance or significance or to imply the number of indicated technical features. In the description of the present invention, term "a plurality of' means two or more than two, unless specified otherwise.

In the present invention, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

A water filtration system 100 according to embodiments of the present disclosure will be described in the following with reference to Fig. 1.

As shown in Fig. 1, the water filtration system 100 according to embodiments of the present disclosure includes a raw-water inlet 100a, a pure-water outlet 100b, a purified-water outlet 100c, a waste-water outlet 100d and an integrated filter cartridge 1.

The integrated filter cartridge includes a pre-filter cartridge, a fine filter cartridge and a post-filter cartridge and has a first port 10a, a second port 10b, a third port 10c, a fourth port 10d, a fifth port 10e and a sixth port 10f. The first port 10a is connected to the raw-water inlet 100a, and the second port 10b is connected to the purified-water outlet 100c. A connection conduit 101 is connected to the third port 10c, and a free end of the connection conduit 101 is connected between the second port 10b and the purified-water outlet 100c. The fourth port 10d is connected to the pure-water outlet 100b. The fifth port 10e is connected to the waste-water outlet 100d. At least one of a conduit in connection with the pure-water outlet 100b and the sixth port 10f is provided with a water storage device 2. Raw water may enter through the raw-water inlet 100a and flow out through the pure-water outlet 100b after being filtered by the pre-filter cartridge, the fine filter cartridge and the post-filter cartridge in sequence. Raw water may enter through the raw-water inlet 100a and flow out through the purified-water outlet 100c after being filtered only by the pre-filter cartridge.

It should be noted herein that, the raw water is filtered by the pre-filter cartridge, the fine filter cartridge and the post-filter cartridge of the integrated filter cartridge 1 in sequence to produce pure water which may be drunk directly; and the raw water is only filtered by the pre-filter cartridge of the integrated filter cartridge 1 to produce purified water which may be used as domestic water for washing, flushing the toilet and the like.

For example, as shown in Fig. 1, the water filtration system 100 may further include a raw-water conduit 102, a pure-water conduit 103, a purified-water conduit 104, a waste-water conduit 105 and a stored-water conduit 106. Specifically, the first port 10a of the integrated filter cartridge 1 is connected to the raw-water inlet 100a through the raw-water conduit 102, and the second port 10b of the integrated filter cartridge 1 is connected to the purified-water outlet 100c through the purified-water conduit 104. The third port 10c of the integrated filter cartridge 1 is connected to the purified-water outlet 100c through the connection conduit 101, and is connected to the second port 10b of the integrated filter cartridge 1 through the connection conduit 101 and the purified-water conduit 104. The fourth port 10d of the integrated filter cartridge 1 is connected to the pure-water outlet 100b through the pure-water conduit 103. The fifth port 10e of the integrated filter cartridge 1 is connected to the waste-water outlet 100d through the waste-water conduit 105. In which the water storage device 2 is provided to the stored-water conduit 106 and connected to the sixth port 10f of the integrated filter cartridge 1 through the stored-water conduit 106. Furthermore, the pure-water outlet 100b may be provided with a pure-water valve 7, so as to implement opening and closing of the pure-water outlet 100b. Similarly, the purified-water outlet 100c may be provided with a purified-water valve 8, so as to implement opening and closing of the purified-water outlet 100c, and the waste-water conduit 105 may be provided with a waste-water valve, so as to implement opening and closing of the waste-water outlet 100d. Alternatively, the waste-water valve may be a waste-water solenoid valve 6 and the waste-water solenoid valve 6 is normally at a constant power-off state, in which case the waste-water solenoid valve 6 defines a small hole therein to ensure circulation in the waste-water conduit 105 meanwhile maintain a water-entering pressure before the fine filter cartridge in the integrated filter cartridge 1. It could be understood that, a specific structure, a working principle and the like of the waste-water solenoid valve 6 are known to those skilled in the art, which will not be elaborated herein.

When the pure water is needed, the pure-water valve 7 may be opened and the purified-water valve 8 may be kept in a closed state. The raw water enters through the raw-water inlet 100a, passes through the raw-water conduit 102, and flows into the integrated filter cartridge 1 through the first port 10a and then is filtered by the pre-filter cartridge to produce the purified water. The purified water flows out of the integrated filter cartridge 1 through the third port 10c, passes through the connection conduit 101 and the purified-water conduit 104 in sequence, and flows into the integrated filter cartridge 1 again through the second port 10b. Then the purified water is filtered by the fine filter cartridge and the post-filter cartridge in sequence to produce the pure water. The pure water flows out of the integrated filter cartridge 1 through the fourth port 10d, passes through the pure-water conduit 103 and flows out through the pure-water outlet 100b, such that a user can use. The pure water may directly serve as drinking water. Waste water generated in this process flows out of the integrated filter cartridge 1 through the fifth port 10e, passes through the waste-water conduit 105 and flows out through the waste-water outlet 100d. The raw water enters through the first port 10a and can be preliminarily filtered by the pre-filter cartridge, for example, the pre-filter cartridge can effectively remove iron rusts, sediments, colloids in the water, and absorb residual chlorine, part of organic matters and the like in the water. The water preliminarily filtered by the pre-filter cartridge can be finely filtered by the fine filter cartridge, for example, the fine filter cartridge can effectively remove bacterium, viruses, heavy metal ions and the like in the water. The water finely filtered by the fine filter cartridge can be further filtered by the post-filter cartridge, for example, the post-filter cartridge can effectively remove residual chlorine and organic matters to improve the mouthfeel of water.

When the purified water is needed, the purified-water valve 8 can be opened, and the pure-water valve 7 may be kept in a closed state. The raw water enters through the raw-water inlet 100a, passes through the raw-water conduit 102, flows into the integrated filter cartridge 1 through the first port 10a and then is filtered by the pre-filter cartridge to produce the purified water. The purified water flows out of the integrated filter cartridge 1 through the third port 10c, passes through the connection conduit 101, and flows out through the purified-water outlet 100c. The purified water can serve as daily domestic water for the user, such as the washing water, etc. In this process, there is a small amount of waste water or substantially no waste water is generated.

As can be seen from the above, the water filtration system 100 can produce the pure water and the purified water of two different qualities, so as to serve for different uses, such that water resources can be fully utilized, the utilization ratio of the water resources is improved, and water can be saved.

When a large amount of water is needed, a certain amount of water can be stored in the water storage device 2 in advance. Specifically, the pure-water valve 7 can be closed, and meanwhile the purified-water valve 8 can be closed. The raw water enters through the raw-water inlet 100a, passes through the raw-water conduit 102, flows into the integrated filter cartridge 1 through the first port 10a, and is filtered by the pre-filter cartridge and then flows out of the integrated filter cartridge 1 through the third port 10c to produce the purified water. The purified water passes through the connection conduit 101 and the purified-water conduit 104, flows into the integrated filter cartridge 1 again through the second port 10b, and is filtered by the fine filter cartridge and then flows out of the integrated filter cartridge 1 through the sixth port 10f, then passes through the stored-water conduit 106 and flows into the water storage device 2 for storage until the water storage device 2 is full of water. The waste water generated in this process can also flow out of the integrated filter cartridge 1 through the fifth port 10e, passes through the waste-water conduit 105 and flows out through the waste-water outlet 100d. By providing the water storage device 2, when the pure-water valve 7 is opened and the purified-water valve 8 is kept in the closed state, water in the water storage device 2 can be made pass through the stored-water conduit 106 and enter the integrated filter cartridge 1 again through the sixth port 10f under the action of pressure or a driving force else, for example, the pressure may be applied on the water in the water storage device 2 by the user or a device else, and then is filtered by the post-filter cartridge to produce the pure water. The pure water then passes through the pure-water conduit 103 and flows out of the pure-water outlet 100b, thereby satisfying the user's requirement for a large amount of water.

Certainly, the present disclosure is not limited to this. The stored-water conduit 106 at the sixth port 10f and the pure-water conduit 103 may be provided with a water storage device 2 separately (not illustrated), so as to further satisfy the user's requirement for a large amount of water. Alternatively, the water filtration system 100 may do not include the stored-water conduit 106, in which case the water storage device 2 can be disposed to the pure-water conduit 103 (not illustrated). In this case, the user's requirement for a large amount of water can also be well satisfied and the water filtration system 100 has relatively less components, thereby reducing the occupied space of the whole water filtration system 100 and saving the cost.

It should be understood that, the purified-water outlet 100c and the pure-water outlet 100b may share a common water-outlet valve. The water-outlet valve may be in three states: when the water-outlet valve is in a first state, the purified-water outlet 100c is opened and the pure-water outlet 100b is closed; when the water-outlet valve is in a second state, the purified-water outlet 100c is closed and the pure-water outlet 100b is closed; when the water-outlet valve is in a third state, the purified-water outlet 100c is closed, and the pure-water outlet 100b is opened. Thus, the number of components in the water filtration system 100 can be further reduced. In which, the water-outlet valve above may be configured as a three-way valve, but it is not limited to this.

In the water filtration system 100 according to embodiments of the present disclosure, by disposing the water storage device 2 to at least one of the conduit connected to the pure-water outlet 100b and the sixth port 10f of the water filtration system 100, the user's requirement for a large amount of water can be satisfied. Meanwhile, the integrated filter cartridge 1 is provided with the first port 10a, the second port 10b, the third port 10c, the fourth port 10d and the fifth port 10e, and the first port 10 is connected to the raw-water inlet 100a of the water filtration system 100, the second port 10b is connected to the purified-water outlet 100c, a free end of the connection conduit 101 at the third port 10c is connected between the second port 10b and the purified-water outlet 100c, the fourth port 10d is connected to the pure-water outlet 100b, and the fifth port 10e is connected to the waste-water outlet 100d, so that the water filtration system 100 can produce the pure water and the purified water of two different qualities, so as to serve for different uses, such that the water resources may be fully utilized, the utilization ratio of the water resources is improved, and water can be saved. In addition, by employing the integrated filter cartridge 1 composed of the pre-filter cartridge, the fine filter cartridge and the post-filter cartridge, the integrated filter cartridge is configured as an integrated structure, thus facilitating replacement of the integrated filter cartridge 1, reducing volume of the integrated filter cartridge 1, while simplifying the connection between conduits of the water filtration system 100, thereby improving the applicability of the water filtration system 100.

In some optional embodiments of the present disclosure, the pre-filter cartridge is disposed separately from the fine filter cartridge and the post-filter cartridge. That is, in the integrated filter cartridge 1, the pre-filter cartridge is apart from the fine filter cartridge and apart from the post-filter cartridge separately, i.e. in separate arrangement, as long as the pre-filter cartridge is located upstream of the fine filter cartridge and the post-filter cartridge, so that a flow path in the integrated filter cartridge 1 can be simplified. It should be understood that, the pre-filter cartridge may also not be apart from the fine filter cartridge and not be apart from the post-filter cartridge. For example, the pre-filter cartridge can be fitted over an exterior of the fine filter cartridge and the post-filter cartridge.

Alternatively, the pre-filter cartridge is located at a top portion of the fine filter cartridge and the post-filter cartridge. For example, in the embodiment shown in Fig. 1, the raw water enters through the raw-water inlet 100a, passes along the raw-water conduit 102, and flows into the integrated filter cartridge 1 through the first port 10a, then is filtered by the pre-filter cartridge and then flows out through the third port 10c. The pre-filter cartridge is disposed at the top portion of the fine filter cartridge and the post-filter cartridge, the first port 10a and the third port 10c both can be disposed at an upper portion of the integrated filter cartridge 1, the second port 10b, the fourth port 10d, the fifth port 10e and the sixth port 10f all can be disposed at a lower portion of the integrated filter cartridge 1, so that ports of the integrated filter cartridge 1 are arranged in a dispersed manner, thereby facilitating connections between the ports of the integrated filter cartridge 1 and the conduits of the water filtration system 100.

In some embodiments of the present disclosure, a water-inlet valve 3 and a booster pump 4 are disposed between the second port 10b and the purified-water outlet 100c. The water-inlet valve 3 is located between the purified-water outlet 100c and the booster pump 4, in which the free end of the connection conduit 101 is located at a side of the water-inlet valve 3 adjacent to the purified-water outlet 100c. For example, as shown in Fig. 1, the water-inlet valve 3 and the booster pump 4 may be disposed on the purified-water conduit 104 at intervals. The water-inlet valve 3 is configured to control on and off states of the purified-water conduit 104. When the water-inlet valve 3 is opened, and the purified-water valve 8 is kept in the closed state, the purified water filtered by the pre-filter cartridge can flow into the integrated filter cartridge 1 for filtration through the purified-water conduit 104; when the water-inlet valve 3 is closed, the purified water filtered by the pre-filter cartridge cannot flow into the integrated filter cartridge 1. The booster pump 4 is configured to improve pressure on the purified water, so as to ensure that the purified water can permeate into the fine filter cartridge for filtration. Specifically, when the water-inlet valve 3 is opened, and the booster pump 4 operates and the purified-water valve 8 is kept in the closed state, the purified water flowing towards the integrated filter cartridge 1 has a larger pressure, so that the purified water can permeate into the fine filter cartridge for filtration smoothly. In this case, the produced pure water can flow through the fourth port 10d, pass through the pure-water conduit 103 and then flow out through the pure-water outlet 100b. When the water-inlet valve 3 is closed, only the purified water can be obtained. In this case, the purified-water valve 8 can be opened, and the purified water flows through the third port 10c, passes through the connection conduit 101 and then flows out through the purified-water outlet 100c. The free end of the connection conduit 101 is located at the side of the water-inlet valve 3 adjacent to the purified-water outlet 100c, so that the purified water obtained from the raw water after being filtered by the pre-filter cartridge of the integrated filter cartridge 1 flows towards the water-inlet valve 3 and the booster pump 4. The pre-filter cartridge removes impurities in the raw water to prevent the water-inlet valve 3 and the booster pump 4 from being clogged by those impurities, thereby ensuring normal operation of the water filtration system 100. Furthermore, components, such as a pre-filtering mesh, need not be disposed upstream of the water-inlet valve 3, thus reducing the number of components in the water filtration system 100, and simplifying the water filtration system 100. Thereby, the water filtration system 100 can obtain the pure water and the purified water of two different qualities, such that the utilization ratio of the water resources is improved. In which, the water-inlet valve 3 may be configured as a solenoid valve, but it is not limited to this.

It should be understood that, the water-inlet valve 3 and the booster pump 4 may not be disposed between the second port 10b and the purified-water outlet 100c. In this case, the waste-water conduit 105 needs to be provided with the waste-water valve. The waste-water valve can be configured as a waste-water manual valve, and the purified-water valve 8 can be configured as a purified-water manual valve and the pure-water valve 7 can be configured as a pure-water manual valve, so that in use of the water filtration system 100, electric equipment such as the booster pump 4 is unnecessary, it's only need to adjust the opening or closing of the purified-water manual valve, the pure-water manual valve and the waste-water manual valve, thereby saving power and reducing cost. Specifically, when the purified water is needed, the purified-water manual valve can be opened, and the pure-water manual valve is kept in the closed state, the raw water is filtered by the integrated filter cartridge 1 and flows out through the third port 10c, the purified water passes through the connection conduit 101 and then flows out through he purified-water outlet 100c for use, in which case there is substantially no waste water generated, the waste-water manual valve can be kept in the closed state. When the pure water is needed, the pure-water manual valve and the waste-water manual valve can be opened, and the purified-water manual valve is kept in the closed state, the raw water can permeate into the fine filter cartridge for filtration by its own pressure, and the pure water flows out of the integrated filter cartridge 1 through the fourth port 10d, passes through the pure-water conduit 103 and finally flows out through the pure-water outlet 100b for use. The waste water passes through the waste-water conduit 105 and flows out though the waste-water outlet 100d.

Similarly, only the water-inlet valve 3 may be disposed between the second port 10b and the purified-water outlet 100c while the booster pump 4 being not disposed between the second port 10b and the purified-water outlet 100c. The water-inlet valve 3 can be configured as a water-inlet manual valve, the purified-water valve 8 can be configured as the purified-water manual valve, and the pure-water valve 7 can be configured as the pure-water manual valve, so that in use of the water filtration system 100, electric equipment such as the booster pump 4 is unnecessary, it's only need to adjust the opening or closing of the purified-water manual valve, the pure-water manual valve and the water-inlet manual valve, thereby saving power and reducing cost. Specifically, when the purified water is needed, the water-inlet manual valve and the purified-water manual valve can be opened, and the pure-water manual valve is kept in the closed state, the raw water is filtered by the integrated filter cartridge 1 and flows out through the third port 10c, the purified water passes through the connection conduit 101 and then flows out through the purified-water outlet 100c for use, in which case there is substantially no waste water generated. When the pure water is needed, the water-inlet manual valve and the pure-water manual valve can be opened, and the purified-water manual valve is kept in the closed state, the raw water can permeate into the fine filter cartridge for filtration by its own pressure, and the pure water flows out of the integrated filter cartridge 1 through the fourth port 10d, passes through the pure-water conduit 103 and finally flows out of the pure-water outlet 100b for use. The waste water passes through the waste-water conduit 105 and flows out through the waste-water outlet 100d. However the present disclosure is not limited to this.

Further, the water storage device 2 is provided with a detection device (not illustrated). The detection device includes at least one of a pressure detection device and a liquid-level detection device. When the detection device detects that the water storage device 2 is not full of liquid, a controller (not illustrated) of the water filtration system 100 controls the water-inlet valve 3 to open and control the booster pump 4 to operate. Thus, by providing the water storage device 2 with the detection device that can detect whether the water storage device 2 is full of the liquid, an automatic water storage function of the water filtration system 100 can be implemented so as to satisfy the requirement for water supply.

For example, as shown in Fig. 1, the pure-water valve 7 and the purified-water valve 8 are closed, and the detection device can detect whether the water stored in the water storage device 2 fills up the water storage device 2 in real time. When the detection device detects that the water storage device 2 is not full of the water, a signal will be transmitted to the controller by the detection device. The controller controls the water-inlet valve 3 to open, and the booster pump 4 to operate. The raw water is filtered by the pre-filter cartridge to produce the purified water. The purified water passes through the connection conduit 101 and the purified-water conduit 104, flows into the integrated filter cartridge 1, and is filtered by the fine filter cartridge. Then the water flows out the integrated filter cartridge 1 through the sixth port 10f, passes through the stored-water conduit 106 and finally flows into the water storage device 2 for storage until the water storage device 2 is full. When the detection device detects that the water storage device 2 is full of the water, the signal is transmitted to the controller, and the controller controls the water-inlet valve 3 to close and the booster pump 4 to stop operating.

Alternatively, the pressure detection device is configured as a pressure sensor, and the liquid-level detection device is configured as a liquid level sensor. The pressure sensor can be configured to detect the pressure of the liquid in the water storage device 2, and the liquid level sensor can be configured to detect the liquid level of the liquid in the water storage device 2, so that the water filtration system 100 is more intelligentized, which offers greater convenience to users.

When the pressure detection device is configured as the pressure sensor, and when the pressure detected by the pressure sensor is smaller than a setting value thereof (for example, when the water storage device 2 is full of the liquid, the pressure of the liquid is determined as the setting value), the controller controls the water-inlet valve 3 to open and controls the booster pump 4 to start. The raw water is filtered by the pre-filter cartridge and the fine filter cartridge, and then water flows into the water storage device 2 until the water storage device 2 is full of the water, in which case the pressure detected by the pressure sensor reaches the setting value thereof, the controller controls the water-inlet valve 3 to close and the booster pump 4 to stop operating.

When the liquid-level detection device is configured as the liquid level sensor, and when the liquid level detected by the liquid level sensor is smaller than a presetting value thereof (for example, when the water storage device 2 is full of the liquid, the liquid level of the liquid is determined as the presetting value), the controller controls the water-inlet valve 3 to open and controls the booster pump 4 to start. The raw water is filtered by the pre-filter cartridge and the fine filter cartridge, and the water flows into the water storage device 2. The amount of the water in the water storage device 2 increases gradually until the water storage device 2 is full of the water, in which case the liquid level detected by the liquid level sensor reaches the presetting value thereof, the controller controls the water-inlet valve 3 to close and the booster pump 4 to stop operating.

It should be understood that, the water storage device 2 may not be provided with the detection device. For example, the water storage device 2 may be transparent, so that the user can visually observe the water level in the water storage device 2. When the user observes that the water storage device 2 is not full of the liquid, i.e. the water level is low, the water-inlet manual valve can be opened, and both the pure-water manual valve and the purified-water manual valve are kept in the closed state, so as to store the water in the water storage device 2. But the present disclosure is not limited to this. Thus, in use of the water filtration system 100, the electrical detection devices such as the pressure sensor and the liquid level sensor for the detection of the amount of water stored in the water storage device 2 may be unnecessary, thereby further saving power and reducing cost.

Further, a pre-filter mesh (not illustrated) is disposed between the first port 10a and the raw-water inlet 100a, that is, the pre-filter mesh is disposed to the raw-water conduit 102, so as to filter out macroscopic objects, such as large particle impurities including iron rusts and the like, in the raw water, so that the raw-water conduit 102 can be prevented from being clogged, and the pre-filter cartridge can be protected so as to extend the service life of the pre-filter cartridge.

In some embodiments of the present disclosure, a check valve and a high pressure switch are disposed between the fourth port 10d and the pure-water outlet 100b, and the check valve and the high pressure switch are integrated into a whole. The check valve can prevent the pure water in the pure-water conduit 103 from flowing back into the integrated filter cartridge 1. The high pressure switch can detect the pressure at its location, and transmit a detection signal to the controller. The controller controls operations of the water-inlet valve 3 and the booster pump 4, to implement a feedback control of the water-inlet valve 3 and the booster pump 4.

For example, in the embodiment shown in Fig. 1, the check valve and the high pressure switch between the fourth port 10d and the pure-water outlet 100b are integrated into a check-valve high pressure switch 5. Thus, by integrating the check valve and the high pressure switch into an integrated structure, the number of components in the water filtration system 100 is reduced, thereby simplifying the water filtration system 100.

When the pure water is needed, the pure-water valve 7 can be opened, and the purified-water valve 8 is kept in the closed state, the high pressure switch can detect that the pressure at its location is smaller than a setting pressure p₁, in which the setting pressure p₁ can satisfy: 0.2MPa ≤p₁≤0.25MPa, and transmit a signal to the controller. The controller controls the water-inlet valve 3 to open and controls the booster pump 4 to operate. The raw water enters through the raw-water inlet 100a, passes through the raw-water conduit 102, flows into the integrated filter cartridge 1 through the first port 10a, and is filtered by the integrated filter cartridge 1 to produce the pure water. The pure water finally flows out through the pure-water outlet 100b for users to direct drink. Then, the pure-water valve 7 is closed, since the check valve limits backflow of the water, the pressure at the location of the high pressure switch increases gradually. When the pressure reaches the setting pressure p₁, the high pressure switch transmits the signal to the controller, the controller controls the water-inlet valve 3 to close and controls the booster pump 4 to stop operating. It should be understood that, the setting pressure p₁ of the high pressure switch may be set according to practical situations, so as to better satisfy the requirement of the user.

When the purified water is needed, the purified-water valve 8 can be opened, and the pure-water valve 7 is kept in the closed state. The raw water enters the raw-water inlet 100a, passes through the raw-water conduit 102, flows into the integrated filter cartridge 1 through the first port 10a, and is filtered by the pre-filter cartridge to produce the purified water. The purified water flows out of the integrated filter cartridge 1 through the third port 10c, passes through the connection conduit 101 and flows out of the purified-water outlet 100c for user's use. In this case, even if the pure-water valve 7 is opened, there will no pure water flowing out through the pure-water outlet 100b. Then, the purified-water valve 8 can be closed, and the purified water cannot flow out through the purified-water outlet 100c.

Certainly, in other embodiments of the present disclosure, the check valve and the high pressure switch may be disposed separately from each other (not illustrated). It should be understood that, only the check valve may be disposed between the fourth port 10d and the pure-water outlet 100b while no high pressure switch is disposed between the fourth port 10d and the pure-water outlet 100b, so as to further simplify structure of the water filtration system 100 and reduce the cost.

Alternatively, the water storage device 2 is configured as a water storage bag, a pressure tank or a water box, and so on. The water storage bag or the pressure tank may be connected to the sixth port 10f, and the water box may be disposed to the pure-water conduit 103, so that the user's requirement for a large amount of water can be satisfied. The water storage bag is foldable, easy to store and small in volume, and water storage bags of various specifications can be customized according to the user's requirement to better satisfy the user's requirement. The pressure tank is safe and reliable, and economical. Furthermore, the pressure tank can utilize compressibility of air in the tank to adjust the amount of the water to be stored. The water box does not pollute the water, thereby ensuring cleanliness and hygiene of the water. Furthermore, the water box has a high strength and light weight, a neat and artistic appearance, and is easy to clean.

Alternatively, the fine filter cartridge is configured as a reverse osmosis filter cartridge or a nanofiltration membrane cartridge and the like. Since the reverse osmosis membrane can filter out the bacterium, viruses, heavy metal ions and the like in the water, the reverse osmosis filter cartridge can strictly separate the water which can pass through a reverse osmosis membrane from the concentrated water which cannot pass through the reverse osmosis membrane. Moreover the nanofiltration membrane can remove organic matters and chrominance in the water, partially remove the soluble salts, and remove water hardness. Furthermore, the nanofiltration membrane filter cartridge can also strictly separate the water which can pass through the nanofiltration membrane from the concentrated water which cannot pass through the nanofiltration membrane. Thus, regardless of the reverse osmosis filter cartridge or the nanofiltration membrane filter cartridge, the fine filter cartridge can obtain a high filtering accuracy and the water passing through the fine filter cartridge has a better water quality, thereby ensuring the water quality of the pure water and ensuring the health of the user.

After the water filtration system 100 has been used for a period of time, the integrated filter cartridge 1 needs to be cleaned, in which case the pure-water valve 7 and the purified-water valve 8 can be closed. The controller controls the water-inlet valve 3 to open, the booster pump 4 to operate, and the waste water solenoid valve 6 to be energized, in which case the waste water solenoid valve 6 is fully opened. The raw water flows into the integrated filter cartridge 1 through the first port 10a to flush the pre-filter cartridge, flows out through the third port 10c, passes through the connection conduit 102 and the purified-water conduit 104 in sequence, and then flows into the integrated filter cartridge 1 again from the second port 10b to flush the fine filter cartridge, such that the impurities attached to the pre-filter cartridge and the fine filter cartridge of the integrated filter cartridge 1 can be removed off, thus making the integrated filter cartridge 1 able to be used continuously, thereby extending the service life of the integrated filter cartridge 1.

Certainly, when there is no electrical equipment such as the booster pump 4, the detection device, the high pressure switch disposed in the water filtration system 100, that is, there is no need to provide electric energy for the water filtration system 100, the water filtration system 100 can also operate normally. For example, the water-inlet valve 3 is configured as the water-inlet manual valve, the pure-water valve 7 is configured as the pure-water manual valve, the purified-water valve 8 is configured as the purified-water manual valve, and the waste-water valve is configured as the waste-water manual valve. In this case, when the integrated filter cartridge 1 is to be cleaned, the pure-water manual valve and the purified-water manual valve can be closed, and the water-inlet manual valve and the waste-water manual valve can be opened, in which case the waste-water manual valve is fully opened. The raw water flows into the integrated filter cartridge 1 from the first port 10a to flush the pre-filter cartridge and the fine filter cartridge in sequence, and the service life of the integrated filter cartridge 1 can also be prolonged.

Other constitutions and operations of the water filtration system 100 according to embodiments of the present disclosure are well known by those skilled in the art, which will not be described in detail herein.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A water filtration system comprising a raw-water inlet, a pure-water outlet, a purified-water outlet, a waste-water outlet and an integrated filter cartridge, the integrated filter cartridge comprising a pre-filter cartridge, a fine filter cartridge and a post-filter cartridge and having a first port, a second port, a third port, a fourth port, a fifth port and a sixth port, the first port being connected to the raw-water inlet, the second port being connected to the purified-water outlet, the third port being connected to a communication flow path, and the communication flow path having a free end being connected between the second port and the purified-water outlet, the fourth port being connected to the pure-water outlet, the fifth port being connected to the waste-water outlet, at least one of a flow path in connection with the pure-water outlet and the sixth port being provided with a water storage device, wherein raw water entering through the raw-water inlet and being filtered by the pre-filter cartridge, the fine filter cartridge and the post-filter cartridge in sequence is configured to flow out through the pure-water outlet, and raw water entering through the raw-water inlet and being filtered only by the pre-filter cartridge is configured to flow out through the purified-water outlet.

2. The water filtration system according to claim 1, wherein the pre-filter cartridge is disposed separately from the fine filter cartridge and the post-filter cartridge.

3. The water filtration system according to claim 1 or 2, wherein the pre-filter cartridge is located at a top portion of the fine filter cartridge and the post-filter cartridge.

4. The water filtration system according to any one of claims 1 to 3, wherein a water-inlet valve and a booster pump are arranged between the second port and the purified-water outlet, the water-inlet valve is located between the purified-water outlet and the booster pump, and the free end of the connection conduit is located at a side of the water-inlet valve adjacent to the purified-water outlet.

5. The water filtration system according to claim 4, wherein the water storage device is provided with a detection device comprising at least one of a pressure detection device and a liquid-level detection device, and when the detection device detects that the water storage device is not full of liquid, a controller of the water filtration system controls the water-inlet valve to open and controls the booster pump to operate.

6. The water filtration system according to any one of claims 1 to 5, wherein a pre-filter mesh is arranged between the first port and the purified-water outlet.

7. The water filtration system according to any one of claims 1 to 6, wherein a check valve and a high pressure switch are arranged between the fourth port and the pure-water outlet, and the check valve and the high pressure switch are integrated into a whole.

8. The water filtration system according to any one of claims 1 to 7, wherein the water storage device is configured as a water storage bag, a pressure tank or a water box.

9. The water filtration system according to any one of claims 1 to 8, wherein the fine filter cartridge is configured as a reverse osmosis filter cartridge or a nanofiltration membrane cartridge.
